# EUROPÄISCHE PATENTSCHRIFT

(11) **EP 1 593 600 B1**
(45) Veröffentlichungstag und Bekanntmachung des Hinweises auf die Patenterteilung: **13.01.2010**
(21) Anmeldenummer: 05009192.5
(22) Anmeldetag: 27.04.2005
(51) Int. Cl.: B65B 13/32, B65B 27/08

(54) **Vorrichtung zur Umreifung eines Packguts**
Apparatus for strapping goods
Machine pour encercler des marchandises

(30) Priorität: 07.05.2004 DE 102004023229; 07.06.2004 DE 102004027730
(43) Veröffentlichungstag der Anmeldung: 09.11.2005
(73) Patentinhaber: Lang, Georg, 97855 Triefenstein (DE); Bührle, Berthold, 89143 Blaubeuren (DE)
(72) Erfinder: Lang, Georg, 97855 Triefenstein (DE); Bührle, Berthold, 89143 Blaubeuren (DE)
(74) Vertreter: Eisele, Otten, Roth & Dobler

(56) Entgegenhaltungen:
- EP-A- 1 170 215
- CH-A5- 693 711
- US-A- 5 842 327

## Beschreibung

### Stand der Technik:

Vorrichtungen zum Umreifen von Packgut, beispielsweise in Stapelform, wie es bei mehreren übereinander gestapelten Zeitungen, Zeitschriften oder dergleichen üblich ist, sind in vielfältiger Weise bekannt. Um einen sicheren Zusammenhalt des gestapelten Packguts zu ermöglichen, ist insbesondere eine Umreifung mit sich kreuzenden Umreifungsbändern üblich. Aus der europäischen Patentschrift EP 0 545 105 B1 ist beispielsweise eine Vorrichtung zum Umreifen eine Packguts mittels zweier Bänder bekannt, bei dem ein Bandführungskanal senkrecht zur Förderrichtung des Packguts und ein diagonal überkreuzender Bandführungskanal vorgesehen ist. Sowohl für ein quer als auch für ein längs um das Packgut verlaufendes Band ist jeweils eine Bindeeinrichtung vorgesehen, die das Einschießen des Bandes in die Bandführung, Spannen, Verbinden und Abtrennen des Bandes bewerkstelligt.

Die Bindeeinrichtungen sind im Wesentlichen unterhalb des Packgutes angeordnet, wobei Teile der Bindeeinrichtung für das Längsband schwenkbar ausgebildet sind. Die beiden Bindeeinrichtungen sind voneinander beabstandet.

Für eine Vielzahl von Packgutabmessungen sind die oben beschriebenen Kreuzumreifungsvorrichtungen ausreichend. Für besondere Anwendungen z.B. für kleinere Packgutabmessungen, ist es jedoch kaum bzw. nur unter einem vergleichsweise hohen technischen bzw. zeitlichen Aufwand möglich, diese Formate mit einer Kreuzumreifung zu versehen.

Die EP 1 170 215 A1 betrifft eine Einheit zum Binden von Banknotenbündeln, wonach vorgeschlagen wird, zunächst ein erstes Band um ein Banknotenbündel zu legen und die Enden zu verbinden. Danach wird das Banknotenbündel gedreht und ein zweites Band quer zum ersten Band um das Bannknotenbündel gelegt, um die Eden des zweiten Bandes verbinden. In einem weiteren Schritt werden die beiden Bänder miteinander verbunden.

### Aufgabe und Vorteile der Erfindung:

Ausgehend von einer Vorrichtung der oben beschriebenen Art, ist es Aufgabe der vorliegenden Erfindung, eine Vorrichtung zur Kreuzumreifung eines Packguts bereitzustellen, die effektiver arbeitet und den Einsatz für eine vergleichsweise größere Zahl von Anwendungsfällen erlaubt.

Diese Aufgabe wird ausgehend vom Oberbegriff des unabhängigen Anspruchs 1 durch die kennzeichnenden Merkmale des Anspruchs 1 und 11 gelöst.

Mit den in den Unteransprüchen genannten Merkmalen sind vorteilhafte und zweckmäßige Weiterbildungen der Erfindung möglich.

Die Erfindung geht von einer Vorrichtung zur Umreifung eines Packguts mittels wenigstens zweier am Packgut kreuzweise anlegbarer Umreifungselemente, insbesondere Umreifungsbänder, aus, mit einer Transporteinheit zum Bewegen des Packguts in eine Umreifungsposition, jeweils einer Führungseinrichtung für die wenigstens zwei Umreifungselemente zur Anordnung der Umreifungselemente um das Packgut, wobei die Führungseinrichtungen jeweils Bewegungsbereiche, die sich kreuzen, für die Umreifungselemente definieren, sowie für die Umreifungselemente eine Bindeeinrichtung zum Einschießen und/oder Spannen der Umreifungselemente und Verbinden überlappender Bereiche der Umreifungselemente. Der Kern der Erfindung liegt darin, dass Verbindungsmittel vorgesehen sind, um die Umreifungselemente, insbesondere im Hinblick auf den Überlappungsbereich eines einzelnen Umreifungselements, in der unmittelbaren Umgebung einer Überkreuzungsstelle der Umreifungselemente und/oder an der Überkreuzungsstelle, vorzugsweise von zwei Umreifungselementen, zu verbinden.

Durch die Verbindung von sich kreuzenden Umreifungsbändern im Nahbereich der bzw. in der Kreuzungsstelle, sind mit den Verbindungsmitteln nahezu sämtliche Packgutformate und -außenformen effektiv bedienbar, insbesondere können vergleichsweise kleinere Packgutformate mit einer Kreuzumbindung versehen werden, was ansonsten nicht oder nur mit einem erheblichen Mehraufwand möglich ist. Dabei sind die Verbindungsmittel gegenüber bisherigen Anordnungen vorteilhafterweise näher an einer Stelle positioniert, die in Umreifungsposition des Packguts benachbart zur Überkreuzungsstelle der Umreifungselemente liegt. Dabei sind die Verbindungsmittel innerhalb eines vergleichsweise eng begrenzten Bereichs angeordnet. In der Regel liegt dieser Bereich unterhalb des Packguts, wo meist auch weitere Bauteile, z.B. die Transporteinheit, Platz finden muss.

Bisher kann bei Anordnungen, die aus dem Stand der Technik bekannt sind, nur in einem deutlich von der Überkreuzungsstelle entfernten Abstand die Verbindung der Umreifungselemente realisiert werden, wobei die Bindeeinrichtung einen wesentlichen Bauraum in der Kreuzumreifungsvorrichtung beansprucht. Dementsprechend kann bei den bekannten Anordnungen im Hinblick auf den Packguttransport, der selbst einen nicht unwesentlichen Bauraum beansprucht, ein merklicher Teil einer Transportebene nicht von der Transporteinheit bedient werden.

Die vorgeschlagenen Verbindungsmittel sind demgegenüber im Hinblick auf die Platzverhältnisse für notwendige weitere Bauteile relativ unproblematisch angeordnet.

Damit kann z.B. ein bislang auftretendes Transportproblem für das Packgut bei bekannten Kreuzumreifungsvorrichtungen vermieden bzw. gegenüber diesen deutlich verkleinert werden, da beispielsweise nahezu durchgängig eingerichtete Transportmittel für das Packgut realisierbar sind.

Dies ist ganz besonders bei Packgütern mit kleineren Auflageflächen auf der Transportebene oder mit bauchiger Außenform, die relativ kleinflächige Kontaktstellen mit der Transporteinheit ausbilden, von Vorteil. Bei diesen Packgütern kommt es nämlich für einen durchgängig ausgebildeten Transport sehr darauf an, dass die Transporteinheit unter dem zu umreifenden Packgut keine merklichen "Lücken" aufweist.

Gemäß einer besonderen Ausführungsform des Erfindungsgegenstandes sind die Verbindungsmittel ausgebildet, die Umreifungselemente innerhalb eines Bereichs um die Überkreuzungsstelle zu verbinden, der durch einen Radius um einen zentralen Punkt der Überkreuzungsstelle definiert ist, wobei der Radius kleiner als ca. 50 mm ist. Dies ermöglicht es insbesondere auch kleinere Packgutformate, z.B. in Postkartenformat, mit der vorgeschlagenen Kreuzumreifungsvorrichtung zu umreifen.

In einer besonders vorteilhaften Ausgestaltung lässt sich dieser Bereich weiter einengen, z.B. entsprechend einem Radius von ca. 30 mm um einen zentralen Überkreuzungspunkt der Umreifungselemente. Dies ist besonders vorteilhaft für Packgüter aus Stapeln mit Auflageflächen-Formaten z.B. mit DIN-A4 bzw. DIN-A5 Format. Es sind aber auch noch kleinere Radien möglich, die gerade noch den Überkreuzungsbereich einschließen oder noch kleiner als der Überkreuzungsbereich sind.

In der Regel wird zwar bei der Verbindung von zwei Umreifungselementen miteinander der gesamte überlappende Bereich der Überkreuzungsstelle der beiden Umreifungselemente flächig verbunden, es ist jedoch auch möglich, z.B. bei relativ kleinen von den Umreifungselementen aufzunehmenden Kräften bzw. bei Bändern, die vergleichsweise breit sind, nur einen Teil des in der Überkreuzungsstelle überlappenden Bereichs zu verbinden, z.B. nur Teilflächen und/oder punkt- bzw. linienförmig.

Insbesondere können übliche Kunststoffbänder mit ca. 9 mm Breite über eine Bandlänge von 15 bis 20 mm flächig verbunden werden. Als Umreifungselemente kommen sämtliche übliche Formen und Materialien in Frage, insbesondere abgeflachte bzw. bandförmige Elemente aus thermoplastischem Kunststoff, z.B. Polypropylen oder Polyester oder auch Banderolen aus Kunststofffolie bzw. kunststoffbeschichtetem Papier. Die Umreifungselemente können glatte bzw. strukturierte Oberflächen aufweisen.

In einer vorteilhaften Ausgestaltung der Erfindung sind die Verbindungsmittel so ausgebildet, zwei Umreifungselemente an deren Überkreuzungsstelle miteinander zu verbinden. Damit kann beispielsweise ein Verrutschen der um das Packgut angelegten Umreifungselemente bzw. möglicherweise ein Herausfallen des Packguts vermieden werden bzw. ein Originalitätsverschluss bereitgestellt werden. Außerdem wird damit die sichere Umbindung des Packguts weiter verbessert. Insbesondere wird bei Ergreifen eines Umreifungselementes der gesamte Kreuzverbund durch die beiden verbundenen Umreifungselemente bedient.

Prinzipiell sind sämtliche Verbindungen sowohl vollflächig oder nur punktuell über die jeweiligen Überlappungsbereiche der zu verbindenden Umreifungselemente ausbildbar.

Weiter wird vorgeschlagen, dass die Verbindungsmittel derart ausgebildet sind, wenigstens ein Umreifungselement in unmittelbarer Umgebung der Überkreuzungsstelle und/oder an der Überkreuzungsstelle zu verbinden. Beispielsweise kann ein Umreifungselement in unmittelbarer Umgebung der Überkreuzungsstelle und ein zweites Umreifungselement in der Überkreuzungsstelle verbunden sein, oder beide Umreifungselemente sind jeweils nur in der unmittelbaren Umgebung der Überkreuzungsstelle verbunden. Für eine besonders sichere Mehrfachverbindung der Umreifungselemente kann z.B. jedes der Umreifungselemente in unmittelbarer Umgebung und in der Überkreuzungsstelle verbunden sein. In diesen Fällen z.B. überlappt jedes einzelne Umreifungselement über einen Abschnitt, der die Überkreuzungsstelle umfasst und sich noch ein Stück weit darüber hinaus erstreckt. Jedes Umreifungselement kann dabei durchgehend flächig verbunden sein bzw. zumindest zwei getrennte Verbindungsbereiche aufweisen.

Es ist außerdem vorteilhaft, wenn die Verbindungsmittel derart gestaltet sind, sowohl wenigstens ein Umreifungselement in unmittelbarer Umgebung der Überkreuzungsstelle und/oder an der Überkreuzungsstelle und die Umreifungselemente an deren Überkreuzungsstelle miteinander zu verbinden. Die damit erzielbare Umreifung ist durch die zusätzliche Verbindung der verschiedenen Umreifungselemente miteinander sicher und rutschfest an dem Packgut angeordnet und wird auch in dieser bei Ergreifen eines Umreifungselements nicht maßgeblich verschoben. Mit einer besonders vorteilhaften Ausführungsform der Verbindungsmittel ist es auch möglich, die Verbindung jedes einzelnen Umreifungselements im Überkreuzungsbereich vorzunehmen und zusätzlich im Kreuzungsbereich auch noch die beiden Umreifungselemente miteinander zu verbinden, was z.B. bei zwei Umreifungsbändern zu einer Gesamtdicke der überlappenden Umreifungselemente im Überkreuzungsbereich mit dem vierfachen Wert der mittleren Einzeldicke der Umreifungselemente führt. Liegen im Unterschied dazu z.B. die sich kreuzenden Umreifungselemente im Kreuzungsbereich nicht mit ihrem überlappenden Abschnitten übereinender, ist nur eine zweilagige Anordnung im Überkreuzungsbereich der beiden Bänder realisiert.

Für alle betrachteten Ausführungsformen können in Sonderfällen auch mehr als zwei Umreifungselemente für eine Kreuzumreifung verbunden werden, wobei z.B. eine gemeinsame Kreuzungsstelle ausgebildet wird bzw. mehrere Kreuzungsstellen sich ergeben können.

In einer zweckmäßigen Ausgestaltung der Erfindung ist zum Verbinden der Umreifungselemente jeweils ein Verschlusselement mit einem Verschlussstempel vorgesehen. Die Verschlussstempel können dabei in unmittelbarer Umgebung der Überkreuzungsstelle angeordnet sein.

Bei einer anderen Ausführungsform kann ein Verschlussstempel auch in der Überkreuzungsstelle und zumindest ein weiterer im Nahbereich angebracht werden.

Dies ermöglicht es, eine sehr flexibel einsetzbare Vorrichtung bereitzustellen. Beispielsweise kann so für jedes Umreifungselement ein eigenes Verschlusselement eingesetzt werden, das genau auf dieses abgestimmt sein kann, z.B. wenn unterschiedliche Umreifungselemente bzw. -parameter für die Längs- und die Querumreifung zum Einsatz kommen sollten.

Beispielsweise lässt sich somit im Einzelfall der Überlappungsbereich eines Umreifungselements von jeweils mehreren Verschlusselementen bedienen, womit mehrere Verbindungsstellen entstehen. Auch ist es denkbar für eine Verbindung im Kreuzungsbereich zweier Umreifungselemente ein eigenes Verschlusselement vorzusehen. Die Überkreuzungsstelle kann ggf. auch mehr als zweilagig, falls in diesen Bereich eine Überlappung eines Umreifungselements fällt, verbunden werden.

Als Verschlussstempel kommen vielfältige Ausgestaltungen in Frage, z.B. ein- oder mehrteilige bzw. längliche, relativ schlanke und damit platzsparende Bauteile. Der Verschlussstempel kann für jedes Umreifungselement bzw. jeden Verbindebereich gesondert eingestellt werden, z.B. mit einer abgestimmten Hubbewegung und/oder Anpresszeiten. Besonders vorteilhaft können jedoch verschiedene Verbindevorgänge mit z.B. einer gleichzeitigen Hubbewegung bzw. einem zeitlich sehr gering versetzten Takt der Hubbewegungen der Verschlusselemente mit sehr kurzer Taktzeit bedient werden.

Wie bei bekannten Verbindungsmitteln kann ein auf den entsprechenden Abschnitt des Verschlussstempels abgestimmtes Kopfteil mit unprofilierter oder mit profilierter Anlagefläche ausgeformt sein, dann z.B. auch als Negativform der Oberflächenstruktur des Verschlussstempels, um die Umreifungselemente sicher zwischen Stempel und Kopfteil in eine Verbindeanpressung zu bringen.

In einer besonders bevorzugten Modifikation des Erfindungsgegenstandes sind die Verbindungsmittel so ausgelegt, die Verbindung der Umreifungselemente in einem einzigen Arbeitsschritt auszuführen, z.B. in einer einzigen Hubbewegung. Bei kurzer Hubzeit ist damit eine kurze Verbindetaktzeit möglich.

Unter einem einzigen Arbeitsschritt ist vorzugsweise im Sinne der Erfindung eine Bewegung eines Teils bzw. mehrerer Teile zu verstehen, die zeitlich eng hintereinander innerhalb einer vergleichsweise sehr kurzen Taktzeit abläuft. In diesen kurzen Taktzeiten bis zum nächsten sich wiederholenden gleichartigen Verbindevorgang findet in der Regel auch die Zurückbringung der Verbindungsmittel in die Ausgangsstellung statt, insbesondere des Verschlussstempels bzw. des Kopfteils.

Insbesondere wird in einem Hub z.B. der Verschlussstempel bzw. eine Energieübertragungseinheit für den Verbindevorgang an die zu verbindenden Umreifungselemente heranbewegt.

Erfindungsgemäß wird weiter vorgeschlagen, dass das Verschlusselement ausgebildet ist, die Verbindung der Umreifungselemente durch mechanisches Verschweißen vorzunehmen. Durch ein mechanisches Verschweißen, z.B. durch Reib- bzw. Vibrationsschweißen, kann z.B. für Umreifungselemente aus thermoplastischen Kunststoffen ohne zusätzliche Hilfsstoffe wie Klebstoffe, Klammern oder dergleichen eine sehr stabile Verbindung realisiert werden. Im Gegensatz zum relativ aufwändigen thermischen Verschweißen arbeitet das mechanische Verschweißen weniger träge. Es kann außerdem zielgerichtet die notwendige Energie bereitgestellt werden bzw. ggf. die thermische Belastungen des umgebenden Systems deutlich begrenzt werden. Insbesondere kann in sehr kurzen Einwirkzeiten eine ausreichende bzw. genau abgestimmte Energiemenge zum punktgenauen Verschweißen mit vergleichsweise kompakten Bauteilen bereitgestellt werden.

Besonders bevorzugt ist es wenn das Verschlusselement derart aufgebaut ist, eine Verschweißung auf Basis von Ultraschall zu realisieren. Mit einem z.B. für eine jeweilige Frequenz des Ultraschalls genau abgestimmten Verschlusselement, kann eine genau definierte Energiemenge auf engstem Raum zur Verfügung gestellt werden.

Vorteilhafterweise können mit dem vorgeschlagenen Ultraschall-Verschlusselement innerhalb eines engen Bereichs um den Überkreuzungsbereich der Umreifungselemente diese sicher verschweißt werden und insbesondere hohe Taktraten mit Verschlussgeschwindigkeiten von bis zu 100 Verschlüssen pro Minute und mehr erreicht werden. Dabei kann der Verschlussstempel mit einem Hub von z.B. wenigen Millimetern auskommen, z.B. mit einem Hubweg von ca. 5 mm.

Es ist von besonderem Vorteil, wenn der Verschlussstempel und/oder das Kopfteil eine Schweißkontur besitzen. Dadurch kann insbesondere eine Profilierung bzw. Aufrauung der an die Schweißkontur anliegenden Bereiche der Umreifungselemente erzielt werden. Die Anlageabschnitte für die verschiedenen Umreifungselemente können zueinander einen Absatz aufweisen, beispielsweise in der Höhe der einfachen oder doppelten Dicke der Umreifungselemente, um die Umreifungselemente in der Verschlussstellung zwischen dem Anlageabschnitten des Verschlussstempels und des Kopfteils optimal flächig in Anlage bringen zu können.

Eine bevorzugte Ausführungsform der Vorrichtung nach dem Oberbegriff des Anspruchs 1, zeichnet sich dadurch aus, dass das Verschlusselement so ausgebildet ist, die Verbindung der Umreifungselemente und/oder von zwei Umreifungselementen miteinander mit einem einzigen Verschlussstempel durchzuführen. Damit lassen sich vorteilhafterweise mit nur einem Bauteil alle genannten Verbindungen gleichzeitig erstellen. Außerdem kann der Platzbedarf des Verschlusselements weiter verringert werden und nur ein Bauteil muss bedient, insbesondere gesteuert, bewegt und versorgt werden.

Dadurch lässt sich verglichen mit bekannten Vorrichtungen insbesondere eine Vorrichtung realisieren, die im Hinblick auf den Kostenfaktor und die Arbeitsgeschwindigkeit, z.B. durch vergleichsweise höheren Verschlussgeschwindigkeiten, deutliche Vorteile aufweist.

### Zeichnung:

In den Figuren ist die Erfindung näher erläutert und werden weitere Einzelheiten und Vorteile der Erfindung beschrieben.

Hierbei zeigen
- Figur 1: eine stark schematisierte Teilansicht einer Kreuzumreifungsmaschine, wie sie aus dem Stand der Technik bekannt ist;
- Figur 2: eine Ansicht auf einen Kreuzungsbereich zweier sich kreuzender Umreifungsbänder mit einem daran angeordneten Verschlussstempel eines Verschlusselements in Draufsicht und
- Figur 3: eine schematisierte perspektivische Teilansicht des in Figur 2 gezeigten Verschlussstempels.

### Figurenbeschreibung:

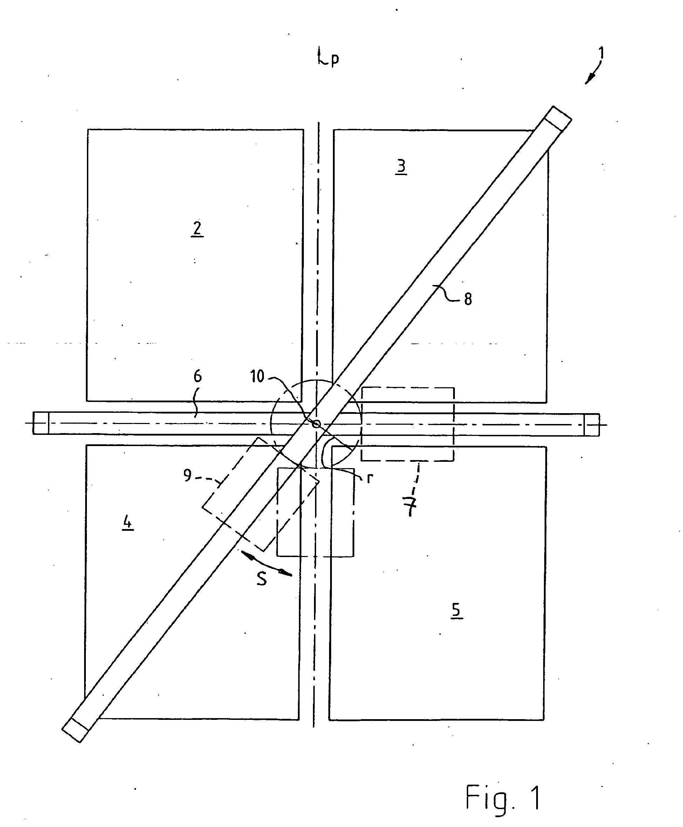

In Figur 1 wird ein Teil einer bekannten Kreuzumreifungsvorrichtung 1 zur Umreifung eines Packgutes in Draufsicht gezeigt. Pfeil P zeigt die Förderrichtung eines nicht dargestellten Packguts, das mit schematisch dargestellten Förderern 2, 3, 4 und 5 in eine Umreifungsposition bzw. nach der Umreifung aus dieser Position weiterbewegt wird. Zur Umreifung des Packguts quer zur Förderrichtung P ist ein Bandführungskanal 6 angeordnet, dem eine Bindeeinrichtung 7 zugeordnet ist. Außerdem ist ein weiterer Bandführungskanal 8 mit einer zugehörigen Bindeeinrichtung 9 vorgesehen. Teile der Bindeeinrichtung 9 sind schwenkbar um eine vertikale Achse 10 ausgebildet, wobei nur Teile des Bandführungskanals 8 schematisiert dargestellt sind. Durch den Doppelpfeil S sind die Verschwenkrichtungen der verschwenkbaren Teile der Bindeeinrichtung 9 angedeutet.

Sobald das Packgut die Umreifungsposition erreicht hat werden nicht dargestellte Umreifungsbänder über insbesondere die Bindeeinrichtungen 7, 9 in die Bandführungskanäle 6, 8 eingeschossen, die Umreifungsbänder verspannt und aus den Bandführungskanälen entlassen, um sich um das Packgut anzulegen. Zum Anlegen des in Förderrichtung P verlaufenden Längsumreifungsbandes schwenken Teile der Bindeeinrichtung 9 in eine entsprechende Verschwenkstellung. Die Bindeeinrichtung 9 weist einen gewissen Abstand zur Schwenkachse 10 auf, damit die Verschwenkbewegung der entsprechenden Teile durch die Bindeeinrichtung 7 nicht behindert wird. An den Kreuzungsstellen der beiden Bandführungskanäle müssen Vorkehrungen getroffen sein, damit das äußere Band durch eine Lücke des inneren Bandführungskanals durchtreten kann.

Ein Verbinden des um das Packgut angelegten Quer- bzw. Längsbandes durch die Bindeeinrichtungen 7, 9 ist durch diese Anordnung nur außerhalb eines gewissen Mindestabstandes vom Kreuzungsbereich der beiden Bänder möglich, z.B. nur außerhalb eines Bereichs, der sich durch einen Radius r um einen Kreuzungspunkt der Schwenkachse 10 in nahezu horizontaler Ebene ergibt.

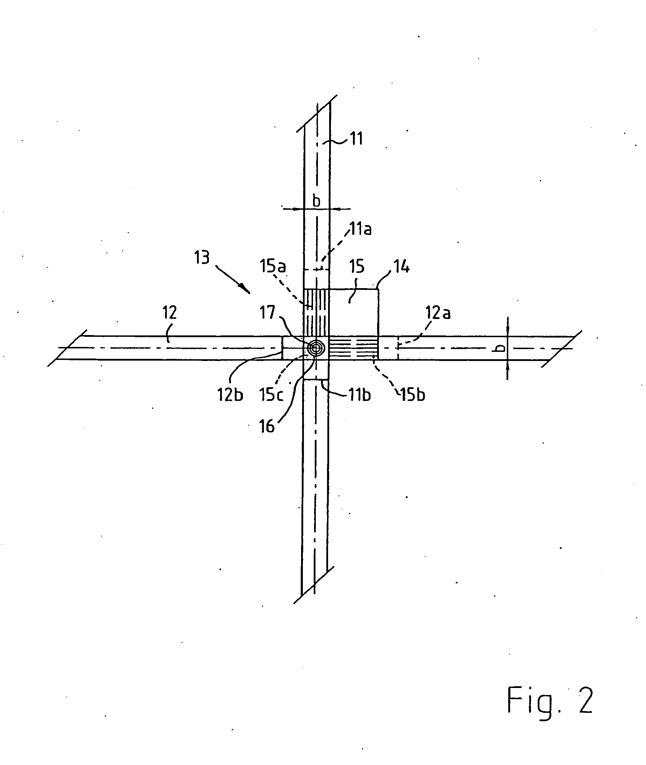

Figur 2 zeigt einen Ausschnitt zweier sich kreuzender Umreifungsbänder 11 und 12 mit der Breite b in einem Überkreuzungsbereich 13 mit einer Anlagefläche 15 eines Verschlussstempels 14 eines Verschlusskopfes in Verschlussstellung. Die teilweise durch die darüber verlaufenden Umreifungsbänder 11, 12 verdeckte Anlagefläche 15 zeigt eine in etwa quadratische Form. Die Anlagefläche 15 weist einen Anlageabschnitt 15a, an dem eine Unterseite des Umreifungsbandes 11 aufliegt sowie einen weiteren Anlageabschnitt 15b auf, an dem eine Unterseite des Umreifungsbandes 12 aufliegt. Die Endabschnitte des Umreifungsbandes 11 überlappen in einem Bereich zwischen einem unten liegenden Bandende 11a und einem oben liegenden Bandende 11b. In gleicher Weise überlappt das Umreifungsband 12 im Bereich zwischen einem unten liegenden Bandende 12a und einem oben liegenden Bandende 12b. Durch Anlage der überlappenden Abschnitte jedes Umreifungsbandes 11, 12 auf den Anlageabschnitten 15a bzw. 15b, findet ein mechanisches Verschweißen der überlappenden Bereiche des jeweiligen Umreifungsbandes 11, 12 durch z.B. Ultraschall statt. Dieser verschweißte Überlappungsbereich ist durch mehrere nebeneinanderliegende Linien dargestellt. Die Länge des verschweißten Bereichs beträt beispielsweise ca. 10 bis 40 mm, insbesondere z.B. ca. 20 bis 30 mm für ein Umreifungsband mit 8 mm Breite.

Außerdem ist eine Überkreuzungsstelle 16 dargestellt, in dem die Umreifungsbänder 11 und 12 sich kreuzen. An der Überkreuzungsstelle 16 ist ein durch konzentrische Kreisringe dargestellter Verschweißbereich 17 angedeutet, in dem das oben liegende Umreifungsband 11 mit dem unten liegenden Umreifungsband 12 über einen gewissen Flächenbereich miteinander verschweißt ist.

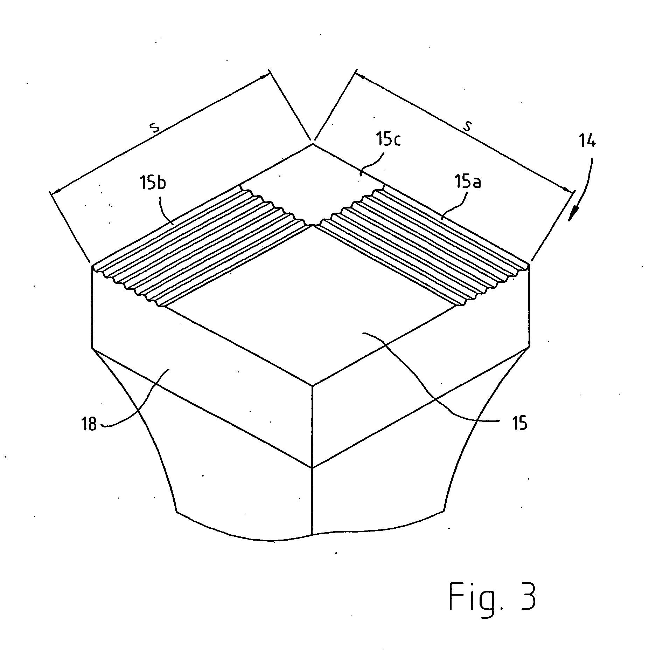

Figur 3 zeigt in Draufsicht den oberen Teile des Verschlussstempel aus Figur 2. Die Anlagefläche 15 weist deutlich sichtbar zwei Anlageabschnitte 15a und 15b auf, die mit einer Rillenstruktur versehen sind, um eine strukturierte Verschweißung und damit gute Verbindung der zu verschweißenden Umreifungsbänder zu gewährleisten. Der Verschlussstempel, der hier nur teilweise gezeigt ist, kann z.B. einstückig. aus metallischem Werkstoff gefertigt sein.

Ein als Kopfteil bzw. Oberschlitten ausgebildetes Gegenstück des Verschlusselements für die Anlagefläche 15 ist nicht dargestellt.

In einem Eckbereich der Anlagefläche 15 ist ein weiterer Anlageabschnitt 15c ausgebildet, an dem in Verschweißposition der sich kreuzenden Umreifungsbänder im Kreuzungsbereich das unten liegende der beiden Umreifungsbänder in Anlage befindet. Der Anlageabschnitt 15c im Kreuzungsbereich der beiden Umreifungsbänder kann etwas nach unten zu einem oder zu beiden Anlageabschnitten 15a bzw. 15b versetzt sein bzw. gemeinsam mit einer der beiden Anlageflächen 15a, 15b gegenüber der restlichen Anlagefläche 15 nach unten versetzt sein.

Die Anlagefläche 15 mit beispielhaften Seitenlängen s von ca. 30 mm und den Anlageabschnitten 15a, 15b und 15c bildet die Oberseite einer Anlageplatte 18, die in etwa quaderförmig ausgebildet ist. Prinzipiell sind eine Vielzahl von verschiedenen Ausgestaltungen der Anlageplatte 18 bzw. der Anlagefläche 15 möglich.

## Patentansprüche

1. Vorrichtung zur Umreifung eines Packguts mittels wenigstens zweier am Packgut kreuzweise anlegbarer Umreifungselemente (11, 12) mit einer Transporteinheit zum Bewegen des Packguts in eine Umreifungsposition, jeweils einer Führungseinrichtung für die wenigstens zwei Umreifungselemente (11, 12) zur Anordnung der Umreifungselemente (11, 12) um das Packgut, wobei die Führungseinrichtungen jeweils Bewegungsbereiche, die sich kreuzen, für die Umreifungselemente (11, 12) definieren, sowie für die Umreifungselemente (11, 12) eine Bindeeinrichtung zum Einschießen und/oder Spannen der Umreifungselemente (11, 12) und Verbinden überlappender Bereiche der Umreifungselemente (11, 12), **dadurch gekennzeichnet, dass** Verbindungsmittel vorgesehen sind, die einen Verschlussstempel (14) und ein auf den Verschlussstempel (14) abgestimmtes Kopfteil umfassen, zwischen denen die Umreifungselemente (11, 12) in eine Verbindeanpressung bringbar sind, um die Umreifungselemente (11, 12) in der unmittelbaren Umgebung einer Überkreuzungsstelle (16) der Umreifungselemente (11, 12) und/oder an der Überkreuzungsstelle (16) zu verbinden.

2. Vorrichtung nach Anspruch 1, **dadurch gekennzeichnet, dass** die Verbindungsmittel ausgebildet sind, die Umreifungselemente (11, 12) innerhalb eines Bereichs um die Überkreuzungsstelle (16) zu verbinden, der durch einen Radius (r) um einen zentralen Punkt der Überkreuzungsstelle (16) definiert ist, wobei der Radius (r) kleiner als ca. 50 mm ist.

3. Vorrichtung nach einem der vorhergehenden Ansprüche, **dadurch gekennzeichnet, dass** die Verbindungsmittel so ausgelegt sind, die Verbindung der Umreifungselemente (11, 12) in einem einzigen Arbeitsschritt auszuführen.

4. Vorrichtung nach einem der vorhergehenden Ansprüche, **dadurch gekennzeichnet, dass** das Verschlusselement ausgebildet ist, die Verbindung der Umreifungselemente (11, 12) durch mechanisches Verschweißen vorzunehmen.

5. Vorrichtung nach einem der vorhergehenden Ansprüche, **dadurch gekennzeichnet, dass** das Verschlusselement derart aufgebaut ist, eine Verschweißung auf Basis von Ultraschall zu realisieren.

6. Vorrichtung nach einem der vorhergehenden Ansprüche, **dadurch gekennzeichnet, dass** der Verschlussstempel (14) und/oder das Kopfteil eine Schweißkontur besitzen.

## Claims

1. Apparatus for strapping a packaged item using at least two strapping elements (11, 12) which are placed crosswise on the packaged Item, comprising a transport unit for moving the packaged item into a strapping position, a guiding device for the at least two strapping elements (11, 12) for arranging the strapping elements (11, 12) around the packaged Item, wherein the guiding devices define Intersecting areas of movement for the strapping elements (11, 12), and for the strapping elements (11, 12) a binding device for Inserting and/or tensioning the strapping elements (11, 12) and for connecting overlapping areas of the strapping elements (11, 12), **characterised in that** connecting means are provided, which comprise a sealing stamp (14) and a head part coordinated with the sealing stamp (14), between which the strapping elements (11, 12) can be brought into a joining press in order to connect the strapping elements (11, 12) in the immediate vicinity of an intersection point (16) of the strapping elements (11, 12) and/or on the intersection point (16).

2. Apparatus according to claim 1, **characterised in that** the connecting means are designed to connect the strapping elements (11, 12) within an area around the crossover point (16), which is defined by a radius (r) about a central point of the crossover point (16), the radius (r) being less than about 50 mm.

3. Apparatus according to one of the preceding claims, **characterised in that** the connecting means are set up to perform the connection of the strapping elements (11, 12) in a singe operation step.

4. Apparatus according to one of the preceding claims, **characterised in that** the sealing element Is designed to perform the connection of the strapping elements (11, 12) by mechanical welding.

5. Apparatus according to one of the preceding claims, **characterised in that** the sealing element is constructed so as to perform the welding on the basis of ultrasound.

6. Apparatus according to one of the preceding claims, **characterised in that** the sealing stamp (14) and/or the head part have a welding contour.

## Revendications

1. Dispositif de cerclage d'un produit à emballer à l'aide d'au moins deux éléments de cerclage (11, 12) appliqués de façon croisée sur le produit, comprenant :
- une unité de transport pour déplacer le produit dans une position de cerclage, avec une installation de guidage respective au moins pour les deux éléments de cerclage (11, 12), pour appliquer les éléments de cerclage (11, 12) autour du produit,
- des installations de guidage définissant respectivement des zones de mouvement qui se croisent pour les éléments de cerclage (11, 12), ainsi qu'une installation de nouage pour les éléments de cerclage (11, 12), pour enserrer et/ou tendre les éléments de cerclage (11, 12) et pour relier les zones qui se chevauchent des éléments de cerclage (11, 12),
**caractérisé par**
des moyens de liaison comprenant un poinçon de fermeture (14) et une tête correspondant au poinçon de fermeture (14) et entre lesquels les éléments de cerclage (11, 12) peuvent être mis en pression de liaison, pour relier les éléments de cerclage (11, 12) dans l'environnement immédiat d'un point d'intersection (16) des éléments de cerclage (11, 12) et/ou au point d'intersection (16).

2. Dispositif selon la revendication 1,
**caractérisé en ce que**
les moyens de liaison sont réalisés pour relier les éléments de cerclage (11, 12) dans une zone autour du point d'intersection (16) défini par un rayon (r) autour du centre du point d'intersection (16), le rayon (r) étant inférieur à environ 50 mm.

3. Dispositif selon l'une des revendications précédentes,
**caractérisé en ce que**
les moyens de liaison sont conçus pour exécuter la liaison des éléments de cerclage (11, 12) au cours d'une seule étape.

4. Dispositif selon l'une des revendications précédentes,
**caractérisé en ce que**
l'élément de fermeture est réalisé pour assurer la liaison des éléments de cerclage (11, 12) par soudage mécanique.

5. Dispositif selon l'une des revendications précédentes,
**caractérisé en ce que**
l'élément de fermeture est construit pour réaliser une soudure par ultrasons.

6. Dispositif selon l'une des revendications précédentes,
**caractérisé en ce que**
le poinçon de fermeture (14) et/ou la tête, ont un contour de soudage.
